# EUROPÄISCHE PATENTSCHRIFT

(11) **EP 2 679 458 B1**
(45) Veröffentlichungstag und Bekanntmachung des Hinweises auf die Patenterteilung: **13.09.2017**
(21) Anmeldenummer: 13002837.6
(22) Anmeldetag: 01.06.2013
(51) Int. Cl.: B60T 8/32

(54) **Vorrichtung und Verfahren zur elektronischen Steuerung einer Betriebsbremse eines Fahrzeugs**
Device and method for electronically controlling a service brake of a vehicle
Dispositif et procédé de commande électronique d'un frein de service d'un véhicule

(30) Priorität: 26.06.2012 DE 102012012710
(43) Veröffentlichungstag der Anmeldung: 01.01.2014
(73) Patentinhaber: WABCO GmbH, 30453 Hannover (DE)
(72) Erfinder: Risse, Rainer, 30982 Pattensen-Reden (DE); Stender, Axel, 31787 Hameln (DE); Wolf, Markus, 31137 Hildesheim (DE)

(56) Entgegenhaltungen:
- DE-A1- 3 201 045
- DE-A1- 19 718 258
- DE-A1-102004 043 510
- US-B1- 6 619 639

## Beschreibung

Die Erfindung betrifft eine Vorrichtung gemäß dem Oberbegriff des Anspruchs 1.

In Fahrzeugen mit Antiblockiersystem (ABS) und einer Gruppe von mindestens zwei zueinander benachbarten Achsen, von denen mindestens eine als Liftachse ausgebildet ist, ist eine Achse dieser Gruppe als Hauptachse für das ABS festgelegt. Der Hauptachse sind Drehzahl-Sensoren als ABS-Sensoren zugeordnet, welche einen Referenzwert für die Fahrzeuggeschwindigkeit liefern. Das bedeutet, dass die Hauptachse nicht Liftachse sein kann, weil die ABS-Sensoren einer gelifteten Hauptachse keine korrekten Daten für die Geschwindigkeit bereitstellen können. Die ABS-Sensoren der Hauptachse werden in bekannten Systemen typischerweise als Sensoren c,d bezeichnet, während ABS-Sensoren der Liftachse in einer Gruppe mit zwei Achsen als Sensoren e,f benannt werden.

Die Kombination aus mindestens einem ABS-Sensor (Raddrehzahl-Sensor) und einem Modulator bildet einen Regelkanal des Antiblockiersystems. Der Modulator hat die Funktionen Bremsdruck aufbauen, Bremsdruck halten und Bremsdruck abbauen und arbeitet vorzugsweise elektro-pneumatisch oder elektro-hydraulisch. Vorzugsweise handelt es sich bei den Modulatoren um ABS-Relaisventile oder ABS-Magnetregelventile. Die Modulatoren können auch allein oder als Paar mit einer Elektronik zu einer Mechatronik kombiniert sein oder Bestandteil eines Modulators eines elektronischen Bremssystems sein.

Ein Regelkanal kann mehrere Sensoren umfassen. Beispielsweise können die Räder einer Achse mit eigenen ABS-Sensoren versehen sein und jeweils eigene Bremsen aufweisen, während die Beaufschlagung der Bremsen mit Bremsdruck über einen gemeinsamen Modulator, also über nur einen Regelkanal erfolgt. Vorzugsweise erfolgt dabei die Regelung derart, dass das zuerst blockierende Rad der Achse für die Regelung maßgeblich ist. Alternativ wird jedes Rad einzeln geregelt und weist einen eigenen Regelkanal mit ABS-Sensor und Modulator auf. Auch können ABS-Sensoren an Rädern verschiedener Achsen einem gemeinsamen Modulator zugeordnet sein. Typischerweise sind die Regelkanäle aller Achsen eines Fahrzeugs durch ein gemeinsames elektronisches Steuergerät, eine ECU, regelbar.

Im Zusammenhang mit Druckluftbremsen werden üblicherweise elektropneumatische Modulatoren verwendet. Die vorliegende Erfindung bezieht sich insbesondere auf Fahrzeuge mit elektropneumatisch betätigten Bremsen.

Moderne Fahrzeuge sind mit einer elektronisch geregelten Luftfederung ausgestattet, welche auch die Betätigung der Liftachsen unterstützt. Insbesondere in Anhängerfahrzeugen mit einer Gruppe von zwei oder mehr zueinander benachbarten Achsen, etwa bei Zentralachsanhängern oder Sattelaufliegern, kann es sinnvoll sein, sowohl eine vordere, als auch eine hintere Achse oder sogar mehrere Achsen anzuheben. Der Hersteller muss sich entscheiden, welche Achse nicht liftbare Hauptachse sein soll und welche Achse bzw. Achsen liftbar sein sollen. Dadurch wird die Variabilität stark eingeschränkt. Beispielsweise muss für einen Zentralachsanhänger mit zwei Achsen festgelegt werden, ob die zweite Achse zur Reduzierung der Stützlast oder aber die erste Achse zur Erhöhung der Stützlast liftbar sein soll. Beides kann unter bestimmten Betriebsbedingungen sinnvoll sein.

DE 32 01 045 A1 offenbart ein Antiblockiersystem für Fahrzeuge, insbesondere für Nutzfahrzeuge mit einer Vorderachse und zwei Hinterachsen, mit vier Regelkanälen und mit einem Sensor für jedes Rad., bei welchem jeweils für die linken und rechten Radbremsen beider Hinterachsen ein gemeinsamer Regelkanal mit jeweils zwei Sensoreingängen vorgesehen ist, um alle Räder des Dreiachsfahrzeuges, Tandem- und Liftachsen eingeschlossen, beim Bremsen mit Sicherheit blockierfrei zu halten. Bei Vorhandensein einer Liftachse ist ein Indikationsschalter vorgesehen, der bei gelifteter Achse ein entsprechendes Signal an die Auswerte- und Regelelektronik gibt und die Bremsdruckleitungen zu den Radbremsen der Liftachse sperrt.

DE 197 18 258 A1 offenbart ein Zentralachs- und Sattelanhänger für ungleiche Teilbeladung.

Aufgabe der vorliegenden Erfindung ist die Schaffung einer Vorrichtung, derart, dass auch die Hauptachse liftbar ist. Insbesondere soll es möglich sein, beliebige, für die ABS-Funktion relevante Achsen bei Fahrt zu heben und dabei die ABS-Regelung aufrecht zu erhalten.

Zur Lösung der Aufgabe weist die erfindungsgemäße Vorrichtung die Merkmale des Anspruchs 1 auf.

Vorteilhafterweise ist die Änderung der Zuordnung des Status "Hauptachse für die ABS-Funktion" zu einer Achse in Abhängigkeit von einer Steuerung für die Betätigung der Liftachsen durchführbar. Mit der Vorrichtung wird auch die Betätigung der Liftachsen gesteuert. Sobald eine Achse geliftet wird, die bisher die Funktion der Hauptachse hatte, wird die Umschaltung der Zuordnung der ABS-Sensoren dieser Achse durchgeführt. Das heißt, die ABS-Sensoren einer anderen und jetzt nicht zum Liften vorgesehenen Achse werden als Sensoren der Hauptachse vom Antiblockiersystem berücksichtigt und liefern die Referenzdaten für die Geschwindigkeit.

Ein elektronisches Bremssystem in Verbindung mit einer elektronisch geregelten Luftfederung mit Ansteuerung von Liftachsen wird in der Praxis bereits eingesetzt. Die Umschaltung der Zuordnung der ABS-Sensoren und des Status "Hauptachse für die ABS-Funktion" kann durch Veränderung der Software erreicht werden. Mit entsprechend veränderter Software prüft das elektronische Bremssystem vor dem Anheben oder Entlasten einer Achse automatisch, ob es sich um die bisher als Hauptachse vorgesehene Achse handelt, definiert dann eine andere, nicht angehobene Achse als neue Hauptachse und deren ABS-Sensoren e,f als Sensoren c,d. Entsprechend werden die bisher definierten Sensoren c,d nun zu Sensoren e,f oder anderen. Vorzugsweise erfolgt die Änderung des Status dann, wenn alle betroffenen Achsen am Boden, also nicht geliftet sind.

Gegenstand der Erfindung ist auch ein Fahrzeug mit ABS-Funktion und einer Gruppe von zwei zueinander benachbarten liftbaren Achsen, wobei eine der Achsen einen Status "Hauptachse für die ABS-Funktion" hat und mindestens eine andere Achse Liftachse ist, und mit einer Vorrichtung mit einer der zuvor erläuterten Merkmalskombinationen. Vorzugsweise sind beide Achsen Liftachsen und je nach Bedarf sind die eine Achse oder die andere Achse anhebbar.

Insbesondere gilt dies für den Fall, dass die Gruppe von Achsen nur aus zwei Achsen besteht. Es kann dann beispielsweise in Abhängigkeit von der Beladung und/oder dem etwa durch die Luftfederung festgestellten Schwerpunkt festgelegt werden, dass die hintere oder vordere Achse der Gruppe angehoben wird.

Es können aber auch mehr Achsen in der Gruppe vorhanden sein, etwa drei oder vier. Auch dabei können in Abhängigkeit von der Beladung oder vom Schwerpunkt oder aus anderen Gründen ein oder mehrere Achsen angehoben oder entlastet werden. Die anzuhebenden Achsen können bei drei oder mehr Achsen in einer Gruppe auch mit Abstand zueinander vorgesehen sein bzw. mit einer nicht anhebbaren Achse dazwischen, etwa der mittleren Achse in einer Gruppe aus drei Achsen. "Zueinander benachbart" im Sinne der Erfindung bedeutet demnach nur, dass die Achsen zu einer gemeinsamen Gruppe gehören. Erfindungsgemäß können auch alle Achsen der Gruppe anhebbar sein.

Bei dem Fahrzeug handelt es sich vorzugsweise um ein Anhängerfahrzeug, etwa einen Sattelauflieger oder einen Zentralachsanhänger, jeweils mit einer Gruppe von zwei oder drei zueinander benachbarten Achsen. Möglich sind aber auch andere Konfigurationen, etwa Zugfahrzeuge oder Deichselanhänger mit Achsgruppen.

Ein erfindungsgemäßes Verfahren weist die Merkmale des diesbezüglichen Hauptanspruchs, nämlich des Anspruchs 5 auf.

Vorteilhafterweise erfolgt die Übertragung oder Umschaltung des Status "Hauptachse für die ABS-Funktion" in Zusammenhang mit dem Liften von Achsen durch eine elektronisch gesteuerte Luftfederung und/oder durch ein elektronisches Bremssystem. Für die elektronisch gesteuerte Luftfederung ist typischerweise eine elektronische Schalteinheit (ECU) vorgesehen, die auch das Anheben der Achsen steuert. Zusätzlich ist die Übertragung oder Umschaltung des Status "Hauptachse für die ABS-Funktion" mit der entsprechenden Zuordnung der ABS-Sensoren integriert. Ein elektronisches Bremssystem kann eine eigene ECU aufweisen oder in eine ECU mit weiteren Funktionen integriert sein, z.B. mit der elektronisch gesteuerten Luftfederung oder anderen Funktionen.

Das erfindungsgemäße Verfahren kann vorzugsweise die folgenden Schritte beinhalten:
a) eine Achse der Gruppe von mindestens zwei zueinander benachbarten Achsen hat in einem laufenden Zeitabschnitt den Status "Hauptachse für die ABS-Funktion" und soll in einem folgenden Zeitabschnitt als Liftachse angehoben werden;
b) zunächst wird geprüft, ob eine andere Achse der Gruppe am Boden, also nicht angehoben ist;
c) falls keine andere Achse am Boden ist, wird eine der anderen Achsen abgesenkt;
d) von den anderen, am Boden befindlichen Achsen der Gruppe wird einer Achse der Status "Hauptachse für die ABS-Funktion" zugewiesen und die bisherige "Hauptachse" verliert diesen Status;
e) der folgende Zeitabschnitt beginnt und die bisherige "Hauptachse" wird als Liftachse angehoben.

Sofern in Schritt c) keine der anderen Achsen am Boden ist, wird vorzugsweise eine zur Hauptachse unmittelbar benachbarte Achse abgesenkt. Es kann zwischen bisheriger Hauptachse und neuer Hauptachse aber auch eine weitere Achse bzw. Liftachse vorhanden sein.

Das Verfahren kann für alle Achsen der Gruppe angewandt werden, auch während der Fahrt. Die dauerhafte Zuordnung einer Achse als Hauptachse ist mit der Erfindung aufgehoben.

Das Verfahren wird vorzugsweise in Verbindung mit einem Anhängerfahrzeug durchgeführt.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: eine Zugmaschine mit Zentralachsanhänger in schematischer Seitenansicht, mit angehobener vorderer Achse des Anhängers,
- Fig. 2: die Zugmaschine mit Zentralachsanhänger in schematischer Unteransicht, mit Zuordnung von ABS-Sensoren der Achsen in der Konfiguration gemäß Figur 1,
- Fig. 3: die Zugmaschine mit Zentralachsanhänger in schematischer Seitenansicht, mit angehobener hinterer Achse des Anhängers,
- Fig. 4: die Zugmaschine mit Zentralachsanhänger in schematischer Unteransicht, mit Zuordnung der ABS-Sensoren in der Konfiguration gemäß Figur 3.

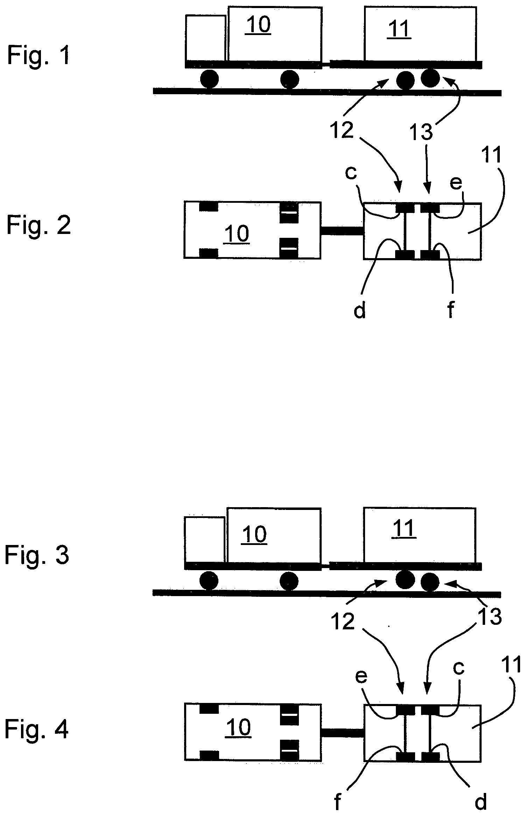

In Figur 1 dargestellt ist ein Lastzug, bestehend aus Zugfahrzeug 10 und Anhängerfahrzeug 11, welches hier ein Zentralachsanhänger mit zwei Achsen 12, 13 ist. Beide Achsen 12, 13 sind als Liftachsen ausgeführt.

Der Lastzug ist mit Druckluftbremsen, einem elektronischen Bremssystem, welches ein Antiblockiersystem umfasst, einer elektronisch gesteuerten Luftfederung und einer Ansteuerung der Liftachsen versehen. Die Funktionen werden von einer gemeinsamen, hier nicht näher gezeigten ECU gesteuert, also auch der Zustand der Liftachsen und das ABS. Eine Verknüpfung der bei der Steuerung der genannten Funktionen anfallenden Daten erfolgt durch eine in der ECU vorgesehene Software.

Die Achse 12 mit ABS-Sensoren c, d (Raddrehzahlsensoren) ist am Boden, also nicht geliftet, und hat in der ECU den Status "Hauptachse für die ABS-Funktion".

Dies bedeutet, dass die ABS-Sensoren c, d der Achse 12 Referenzwerte für die vom Antiblockiersystem verwendete Fahrzeuggeschwindigkeit liefern.

Die Bezeichnung der ABS-Sensoren der Hauptachse als Sensoren c, d ist ein typisches Beispiel. Andere Bezeichnungen sind auch möglich aber hier nicht eingezeichnet. Die Achse 13 ist geliftet. Deren Drehzahlsensoren werden typischerweise als ABS-Sensoren e, f bezeichnet.

In der Software der ECU ist vorgesehen, dass der Status der Achse 12 als Hauptachse veränderbar ist. Deshalb kann auch die Achse 12 eine Liftachse sein. Konkret wird der Status von der Achse 12 auf die Achse 13 übertragen, sobald die Achse 13 am Boden ist und die Achse 12 angehoben werden soll, siehe Figur 3. Die Achse 13 ist dann Hauptachse. Entsprechend sind deren ABS-Sensoren anschließend als Sensoren c, d deklariert, siehe Figur 4. Die bisher als Hauptachse referenzierte Achse 12 ist nun Liftachse mit Sensoren e,f.

## Patentansprüche

1. Vorrichtung zur elektronischen Steuerung einer Betriebsbremse eines Fahrzeugs mit ABS-Funktion und einer Gruppe von zwei zueinander benachbarten mit ABS-Sensoren (c-f) versehenen liftbaren Achsen (12, 13), wobei eine nicht-geliftete Achse der Gruppe in der Vorrichtung einen Status "Hauptachse für die ABS-Funktion", worin nur die ABS-Sensoren (c,d) dieser Achse der Vorrichtung die Referenzdaten für die Geschwindigkeit liefern, hat, und
wobei in der Vorrichtung die Zuordnung des Status "Hauptachse für die ABS-Funktion" zum Liften der bisherigen Hauptachse auf die andere Achse übertragen werden kann, welche nachfolgend nicht zum Liften vorgesehen ist.

2. Vorrichtung nach Anspruch 1, **dadurch gekennzeichnet, dass** die Änderung der Zuordnung des Status "Hauptachse für die ABS-Funktion" zu einer Achse in Abhängigkeit von einer Steuerung für die Betätigung der Liftachsen durchführbar ist.

3. Fahrzeug mit ABS-Funktion und einer Gruppe von zwei zueinander benachbarten liftbaren Achsen, wobei eine Achse (12) der Gruppe einen Status "Hauptachse für die ABS-Funktion" hat und mindestens eine andere Achse (13) der Gruppe Liftachse ist, **gekennzeichnet durch** eine Vorrichtung nach einem der voranstehenden Ansprüche.

4. Fahrzeug nach Anspruch 3, **dadurch gekennzeichnet, dass** beide Achsen (12, 13) Liftachsen sind und je nach Bedarf die eine Achse (12) oder die andere Achse (13) anhebbar ist.

5. Verfahren zur elektronischen Steuerung einer Betriebsbremse eines Fahrzeugs mit ABS-Funktion und einer Gruppe von zwei zueinander benachbarten mit ABS-Sensoren (c-f) versehenen liftbaren Achsen (12, 13),
wobei eine nicht-geliftete Achse der Gruppe einen Status "Hauptachse für die ABS-Funktion", worin nur die ABS-Sensoren (c,d) dieser Achse die Referenzdaten für die Geschwindigkeit liefern, hat, und
wobei zum Liften der bisherigen Hauptachse der Status "Hauptachse für die ABS-Funktion", auf die andere Achse übertragen wird, welche nachfolgend nicht zum Liften vorgesehen ist.

6. Verfahren nach Anspruch 5, **dadurch gekennzeichnet, dass** die Übertragung oder Umschaltung des Status "Hauptachse für die ABS-Funktion" im Zusammenhang mit dem Liften von Achsen durch eine elektronisch gesteuerte Luftfederung erfolgt.

7. Verfahren nach Anspruch 5 oder 6, **gekennzeichnet durch** folgende Schritte:
a) eine Achse der Gruppe von mindestens zwei zueinander benachbarten Achsen (12, 13) hat in einem laufenden Zeitabschnitt den Status "Hauptachse für die ABS-Funktion" und soll in einem folgenden Zeitabschnitt als Liftachse angehoben werden;
b) zunächst wird geprüft, ob eine andere Achse der Gruppe am Boden, also nicht angehoben ist;
c) falls keine andere Achse am Boden ist, wird eine der anderen Achsen abgesenkt;
d) von den anderen, am Boden befindlichen Achsen der Gruppe wird einer Achse der Status "Hauptachse für die ABS-Funktion" zugewiesen und die bisherige "Hauptachse" verliert diesen Status;
e) der folgende Zeitabschnitt beginnt und die bisherige "Hauptachse" wird als Liftachse angehoben.

8. Verfahren nach einem der Ansprüche 5 bis 7, **dadurch gekennzeichnet, dass** die Übertragung oder Umschaltung des Status "Hauptachse für die ABS-Funktion" im Zusammenhang mit dem Liften von Achsen durch ein elektronisches Bremssystem erfolgt.

9. Verfahren nach einem der Ansprüchen 5 bis 8, **dadurch gekennzeichnet, dass** das Fahrzeug ein Anhängerfahrzeug ist.

## Claims

1. Device for electronically controlling a service brake of a vehicle with an ABS function and a group of two liftable axles (12, 13) which are adjacent to one another and provided with ABS sensors (c-f), wherein a non-lifted axle of the group in the device has a "main axle for the ABS function" status, in which only the ABS sensors (c,d) of this axle of the device supply the reference data for the speed, and wherein in the device the assignment of the "main axle for the ABS function" status for lifting the previous main axle can be transferred to the other axle, which is subsequently not provided for lifting.

2. Device according to Claim 1, **characterized in that** the changing of the assignment of the "main axle for the ABS function" status to an axle can be carried out as a function of a controller for the activation of the lifting axles.

3. Vehicle with ABS function and a group of two liftable axles which are adjacent to one another, wherein one axle (12) of the group has a "main axle for the ABS function" status, and at least one other axle (13) of the group is a lifting axle, **characterized by** a device according to one of the preceding claims.

4. Vehicle according to Claim 3, **characterized in that** both axles (12, 13) are lifting axles and the one axle (12) or the other axle (13) can be lifted depending on requirements.

5. Method for electronically controlling a service brake of a vehicle with an ABS function and a group of two liftable axles (12, 13) which are adjacent to one another and provided with ABS sensors (c-f), wherein a non-lifted axle of the group has a "main axle for the ABS function" status, in which only the ABS sensors (c,d) of this axle supply the reference data for the speed, and
wherein in order to lift the previous main axle the "main axle for the ABS function" status is transferred to the other axle which subsequently is not provided for lifting.

6. Method according to Claim 5, **characterized in that** the transfer or switching of the "main axle for the ABS function" status takes place in conjunction with the lifting of axles by an electronically controlled air suspension system.

7. Method according to Claim 5 or 6, **characterized by** the following steps:
a) an axle of the group of at least two axles (12, 13) which are adjacent to one another has the "main axle for the ABS function" status in a running time period and is to be lifted as a lifting axle in a following time period;
b) it is initially checked whether another axle of the group is on the ground, that is to say is not lifted;
c) if no other axle is on the ground, one of the other axles is lowered;
d) of the other axles of the group which are located on the ground, one axle is assigned the "main axle for the ABS function" status and the previous "main axle" loses this status;
e) the following time period starts and the previous "main axle" is lifted as a lifting axle.

8. Method according to one of Claims 5 to 7, **characterized in that** the transfer or switching of the "main axle for the ABS function" status takes place in conjunction with the lifting of axles by means of an electronic brake system.

9. Method according to one of Claims 5 to 8, **characterized in that** the vehicle is a trailer vehicle.

## Revendications

1. Dispositif de commande électronique d'un frein de service d'un véhicule comportant une fonction ABS et d'un groupe de deux essieux rétractables (12, 13) voisins l'un de l'autre et munis de capteurs ABS (c-f), dans lequel un essieu non rétracté du groupe présente dans le dispositif un état "d'essieu principal pour la fonction ABS" pour lequel seuls les capteurs ABS (c, d) dudit essieu du dispositif délivrent les données de référence pour la vitesse, et
dans lequel l'association de l'état "d'essieu principal pour la fonction ABS" peut être transférée, dans le dispositif, à la rétraction de l'essieu jusqu'alors principal à l'autre essieu, qui est prévu pour ne pas être rétracté ultérieurement.

2. Dispositif selon la revendication 1, **caractérisé en ce que** la modification de l'association de l'état "d'essieu principal pour la fonction ABS" à un essieu peut être effectuée en fonction d'une commande destinée à l'actionnement des essieux rétractables.

3. Véhicule présentant une fonction ABS et un groupe de deux essieux rétractables voisins l'un de l'autre, dans lequel un essieu (12) du groupe présente un état "d'essieu principal pour la fonction ABS" et au moins un autre essieu (13) du groupe est un essieu rétractable, **caractérisé par** un dispositif selon l'une quelconque des revendications précédentes.

4. Véhicule selon la revendication 3, **caractérisé en ce que** les deux essieux (12, 13) sont des essieux rétractables et **en ce que** l'un desdits essieux (12) ou l'autre desdits essieux (13) peut respectivement être relevé selon les nécessités.

5. Procédé de commande électronique d'un frein de service d'un véhicule comportant une fonction ABS et un groupe de deux essieux rétractables (12, 13) voisins l'un de l'autre et munis de capteurs ABS (c-f),
dans lequel un essieu non rétracté du groupe présente un état "d'essieu principal pour la fonction ABS" pour lequel seuls les capteurs ABS (c, d) dudit essieu délivrent les données de référence pour la vitesse, et dans lequel, pour la rétraction de l'essieu jusqu'alors principal, l'état "d'essieu principal pour la fonction ABS" est transféré à l'autre essieu, qui est prévu pour n'être rétracté qu'ultérieurement.

6. Procédé selon la revendication 5, **caractérisé en ce que** le transfert ou le basculement de l'état "d'essieu principal pour la fonction ABS" est effectué en association avec la rétraction d'essieux au moyen d'une suspension pneumatique commandée électroniquement.

7. Procédé selon la revendication 5 ou 6, **caractérisé par** les étapes suivantes :
a) un essieu du groupe d'au moins deux essieux (12, 13) voisins l'un de l'autre présente, lors d'une période en cours, l'état "d'essieu principal pour la fonction ABS" et doit être relevé lors d'une période suivante en tant qu'essieu rétractable ;
b) il est ensuite vérifié si un autre essieu du groupe se trouve au sol et n'est donc pas relevé ;
c) dans le cas où aucun autre essieu ne se trouve au sol, l'un des autres essieux est abaissé ;
d) parmi les autres essieux du groupe se trouvant au sol, l'état "d'essieu principal pour la fonction ABS" est affecté à un essieu et "l'essieu jusqu'alors principal" perd cet état ;
e) la période suivante commence et "l'essieu jusqu'alors principal" est relevé en tant qu'essieu rétractable.

8. Procédé selon l'une quelconque des revendications 5 à 7, **caractérisé en ce que** le transfert ou le basculement de l'état "d'essieu principal pour la fonction ABS" est effectué en association avec la rétraction d'essieux au moyen d'un système de freinage électronique.

9. Procédé selon l'une quelconque des revendications 5 à 8, **caractérisé en ce que** le véhicule est un véhicule à remorque.
